# FASCICULE DE BREVET EUROPEEN

(11) **EP 2 430 413 B1**
(45) Date de publication et mention de la délivrance du brevet: **25.08.2021**
(21) Numéro de dépôt: 10723694.5
(22) Date de dépôt: 16.04.2010
(51) Int. Cl.: G01H 1/00, G01M 17/00

(54) **DISPOSITIF PORTABLE D'AIDE À UN DIAGNOSTIC VIBROACOUSTIQUE**
TRAGBARE EINRICHTUNG ZUR HILFE BEI DER VIBROAKUSTISCHEN DIAGNOSE
PORTABLE DEVICE FOR ASSISTING IN VIBROACOUSTIC DIAGNOSIS

(30) Priorité: 14.05.2009 FR 0953184
(43) Date de publication de la demande: 21.03.2012
(73) Titulaire: PSA Automobiles SA, 78300 Poissy (FR)
(72) Inventeur: PERONNET, Cyril, 78510 Triel Sur Seine (FR); RAGUENET, Wilfrid, 78700 Conflans Ste Honorine (FR); BOUTTAZ, Olivier, 78740 Vaux-sur-seine (FR)
(74) Mandataire: Ménès, Catherine
(86) Numéro de dépôt international: PCT/FR2010/050741
(87) Numéro de publication internationale: WO 2010/130907

(56) Documents cités:
- EP-A2- 0 570 229
- US-A1- 2003 088 346
- US-A1- 2003 187 557
- US-A1- 2009 024 268
- None

## Description

La présente invention concerne un dispositif portable d'aide à un diagnostic vibroacoustique pour l'analyse de bruits notamment émis par un véhicule automobile. Elle concerne également un ensemble portable comportant un tel dispositif.

Plus précisément, l'invention concerne un dispositif portable comportant une source d'alimentation en courant électrique, un haut-parleur, au moins un capteur sonore de type pince et un boîtier de raccordement muni de prises de raccordement électrique du haut-parleur et de ladite au moins une pince.

Des dispositifs permettant de diagnostiquer un problème d'origine vibroacoustique sont connus de documents tels que US2003187557A1, US2009024268A1 et EP0570229A2. On connait encore du document US2003088346A1 un dispositif dans lequel le boitier de raccordement comporte des moyens de transformation des signaux fournis par les capteurs.

Un tel dispositif portable est très utile pour une équipe mobile d'assistance après-vente d'un véhicule automobile afin d'aider cette équipe à diagnostiquer un problème d'origine vibroacoustique sur ce véhicule automobile. Notamment, le capteur de type pince permet la détection des bruits dont la propagation est solidienne, et une exploitation possible en roulage. Son utilisation peut ainsi être indiquée en particulier pour les problèmes de châssis du véhicule ou de liaison au sol.

En général, le dispositif comporte plusieurs pinces raccordables simultanément, via plusieurs prises de raccordement électrique, au boîtier dont la fonction est de sélectionner la pince qui doit être reliée électriquement au haut-parleur grâce à la présence d'un commutateur sur ce boîtier. Un casque spécifique est fourni en tant que haut-parleur : il est raccordable également au boîtier et fournit l'alimentation en énergie électrique du dispositif portable grâce à la présence d'un compartiment à piles dans ce casque.

Le principe de fonctionnement de ce dispositif portable est le suivant. Un utilisateur dispose les pinces raccordées au boîtier de commutation aux positions les plus vraisemblables dans le véhicule automobile en fonction d'un problème de nature vibroacoustique qu'il souhaite diagnostiquer (voie de passage vibratoire, zone d'émission, etc.). Plusieurs pinces peuvent ainsi être connectées au boîtier de commutation qui, relié au casque porté par l'utilisateur, permet de juger « à l'écoute » de la localisation la plus pertinente.

Malheureusement ce dispositif portable fonctionne généralement avec des piles non rechargeables. De plus, il nécessite l'utilisation d'un casque spécifique, souvent de qualité auditive médiocre. Enfin, il ne permet pas de détecter des bruits aériens.

Il existe aussi des dispositifs d'aide au diagnostic acoustique pour des bruits d'origine aérienne. Mais ils sont de type différent. Ils comportent en général un microphone, de type stylo par exemple, et un casque raccordable directement au microphone. L'utilisateur balaye la zone d'analyse avec le microphone, ce qui lui permet d'écouter au plus près des sources sonores et de localiser ainsi la zone responsable du bruit aérien recherché.

Par conséquent, pour un diagnostic vibroacoustique complet, il faut se munir des deux types de dispositifs précités ce qui est encombrant. Par ailleurs ces deux dispositifs fonctionnent avec des piles non rechargeables et un casque spécifique destiné à recevoir ces piles.

Il peut ainsi être souhaité de prévoir un dispositif portable d'aide à un diagnostic vibroacoustique qui permette de s'affranchir d'au moins une partie des problèmes et contraintes précités.

Pour cela, l'invention propose un dispositif portable d'aide à un diagnostic vibroacoustique pour l'analyse de bruits notamment émis par un véhicule automobile, comportant une source d'alimentation en courant électrique, un haut-parleur, des capteurs sonores de type pince et un capteur sonore de type microphone, et un boîtier de raccordement muni de prises de raccordement électrique du haut-parleur et de ladite au moins une pince et du capteur sonore de type microphone, la source d'alimentation en courant électrique étant intégrée dans le boîtier de raccordement, caractérisé en ce que les capteurs sonores de type pince sont de taille différentes et dans lequel le boîtier de raccordement comporte plusieurs prises de raccordement aux capteurs sonores différents, les capteurs sonores étant raccordables simultanément via les prises de raccordement, et un commutateur pour sélectionner la transmission de signaux sonores de l'un quelconque de ces capteurs vers le haut-parleur, le boîtier de raccordement comportant des moyens de transformation des signaux fournis par les capteurs sonores en au moins un fichier de données au format prédéterminé lisible par un ordinateur et des moyens de raccordement à cet ordinateur.

Ainsi, le boîtier de raccordement remplit une nouvelle fonction d'alimentation en courant électrique du dispositif portable. Ses dimensions le rendent plus adapté au logement d'une source d'alimentation plus performante que de simples piles non rechargeables. Par ailleurs, cela permet d'envisager l'utilisation d'un haut-parleur standard. Les signaux captés sont ainsi directement exploitables par un opérateur disposant d'outils informatiques adéquats.

Avoir plusieurs pinces de taille différente permet d'envisager une accroche sur l'ensemble des éléments du compartiment moteur et des transmissions du véhicule automobile.

De façon optionnelle, un dispositif portable d'aide à un diagnostic vibroacoustique selon l'invention peut comporter en outre un capteur sonore de type microphone, notamment un microphone de type stylo ou micro-cravate, raccordable électriquement au boîtier de raccordement.

On fournit ainsi un outil portable complet d'aide au diagnostic vibroacoustique pour un encombrement réduit.

De façon optionnelle également, le microphone est combiné à une caméra. Dans ce cas, les signaux fournis par ce type de capteur sont sonores mais également vidéo.

De façon optionnelle également, la source d'alimentation en courant électrique comporte un accumulateur électrique, notamment une batterie d'accumulateurs. La recharge peut se faire à l'aide d'un cordon de raccordement au secteur ou à un allume-cigare de véhicule automobile.

De façon optionnelle également, le boîtier de raccordement comporte un témoin de l'état de charge de l'accumulateur électrique.

De façon optionnelle également, le haut-parleur est intégré dans un casque d'écoute audio raccordable au boîtier de raccordement. Cela améliore la qualité de la restitution sonore, surtout si le casque est de bonne qualité et recouvre suffisamment les oreilles de l'utilisateur pour atténuer les bruits ambiants indésirables.

De façon optionnelle également, un dispositif d'aide à un diagnostic vibroacoustique selon l'invention peut comporter quatre pinces.

De façon optionnelle également, le boîtier de raccordement comporte un bouton de réglage de niveau sonore dans le haut-parleur.

De façon optionnelle également, le boîtier de raccordement comporte un équaliseur pour le filtrage des signaux sonores fournis par ledit au moins un capteur sonore.

L'invention a également pour objet un ensemble portable d'aide à un diagnostic vibroacoustique comportant un dispositif tel que défini précédemment et une mallette de transport conçue pour le rangement du dispositif.

L'invention sera mieux comprise à l'aide de la description qui va suivre, donnée uniquement à titre d'exemple et faite en se référant aux dessins annexés dans lesquels :
- la figure 1 représente schématiquement la structure générale d'un dispositif portable d'aide à un diagnostic vibroacoustique selon un mode de réalisation de l'invention, et
- la figure 2 représente schématiquement la structure générale d'un ensemble portable d'aide à un diagnostic vibroacoustique selon un mode de réalisation de l'invention.

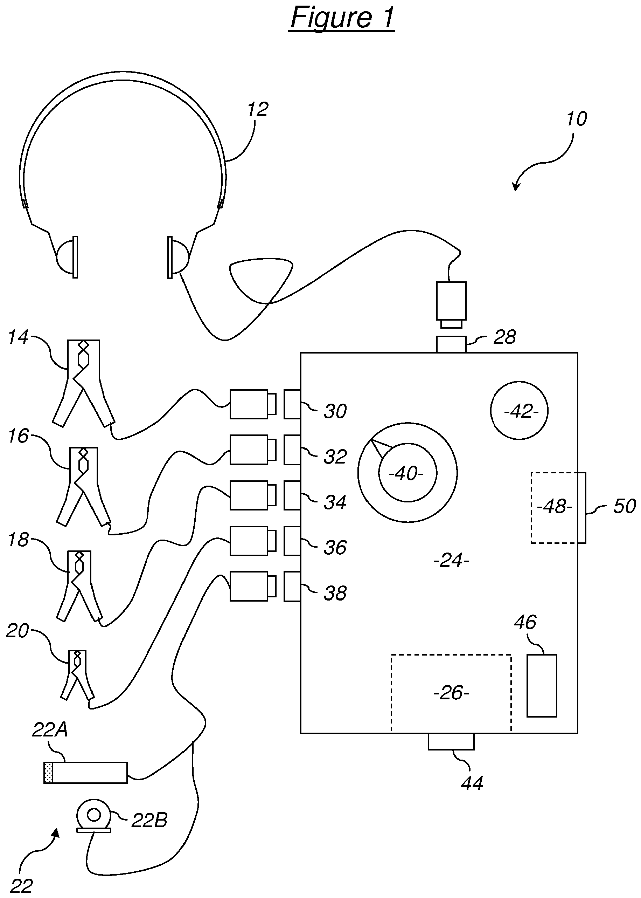

Le dispositif portable 10 d'aide à un diagnostic vibroacoustique représenté sur la figure 1 comporte un haut-parleur intégré dans un casque audio 12 et des capteurs sonores dont quatre pinces 14, 16, 18 et 20 de tailles différentes, pour la détection de bruits de nature solide, et un microphone 22, pour la détection de bruits aériens. Il comporte aussi un boîtier 24 de raccordement électrique des éléments précités et une source 26 d'alimentation en courant électrique intégrée dans le boîtier 24. Le microphone 22 est par exemple un microphone de type stylo ou micro-cravate 22A, pour une bonne prise en main et une approche simple des zones difficiles, combiné avec une caméra 22B de type « webcam » et fonctionne par exemple dans la gamme de fréquences sonores [20 - 20000 Hz]. Le casque 12 est de préférence choisi pour sa qualité de restitution sonore et sa capacité à atténuer les bruits ambiants autres que ceux que l'on souhaite détecter (casque couvrant les oreilles de l'utilisateur). Les pinces 14, 16, 18 et 20 fonctionnent par exemple dans la gamme de fréquences sonores [20 - 6000 Hz].

Le boîtier 24 est muni de prises de raccordement électrique au casque audio 12 (prise 28), aux quatre pinces 14, 16, 18, 20 (prises 30, 32, 34, 36) et au microphone 22 (prise 38). Ces prises de raccordement sont de préférence identiques. Par ailleurs, le boîtier comporte un commutateur 40, par exemple rotatif, pour raccorder électriquement de façon sélective l'un des capteurs 14 à 22 au casque 12. Ainsi, les sons détectés par le capteur sélectionné sont transmis au haut-parleur du casque 12. Le conditionnement des signaux, c'est-à-dire leur transformation éventuelle de signaux mécaniques en signaux électriques, leur amplification et l'alimentation des capteurs à partir de la source 26, est bien sûr intégré dans le boîtier 24.

Le niveau sonore du haut-parleur dans le casque 12 est réglable à l'aide d'un bouton de réglage 42 intégré dans le boîtier 24. Les signaux sonores transmis par l'un quelconque des capteurs 14 à 22 sont éventuellement filtrés par un équaliseur (non représenté) également intégré dans le boîtier 24.

La source 26 d'alimentation en courant électrique comporte avantageusement un accumulateur électrique, notamment une batterie. La recharge de cette batterie 26 se fait à l'aide d'un connecteur 44 du boîtier 24 qui permet de la raccorder au secteur ou à un allume-cigare de véhicule automobile à l'aide d'un cordon électrique. On peut ainsi envisager de munir le boîtier d'une batterie d'accumulateurs électriques dont l'autonomie dépasse huit heures. Pour faciliter la gestion de la recharge de cette batterie, un témoin 46 de l'état de charge de la batterie 26 peut être prévu dans le boîtier 24.

Ainsi, le boîtier de raccordement 24 remplit non seulement une fonction de commutation dans la transmission vers le casque 12 des signaux sonores fournis par les capteurs, mais également une nouvelle fonction d'alimentation en courant électrique du dispositif portable 10. Ses dimensions envisageables le rendent plus adapté au logement d'une source d'alimentation performante que n'importe lequel des autres éléments constitutifs précités du dispositif portable 10.

Dans le mode de réalisation illustré sur la figure 1, le boîtier 24 comporte en outre des moyens 48 de transformation des signaux fournis par les capteurs 14 à 22, y compris les éventuels signaux vidéo fournis par la caméra 22B, en fichiers de données numériques dont le format prédéterminé est lisible par un ordinateur, notamment par une carte son classique. Ces moyens 48 sont par exemple matérialisés par un convertisseur classique apte à transformer les signaux captés en fichiers de type *.wav, *.avi ou tout autre format lisible par un ordinateur sans que celui-ci ne dispose d'éléments supplémentaires spécifiques.

Pour permettre sa connexion à un ordinateur, le boîtier 24 comporte un connecteur 50 de raccordement à un tel ordinateur. Il peut s'agir par exemple d'un simple port de type USB. Les signaux captés sont alors directement exploitables par un opérateur à partir de l'ordinateur raccordé au dispositif portable 10.

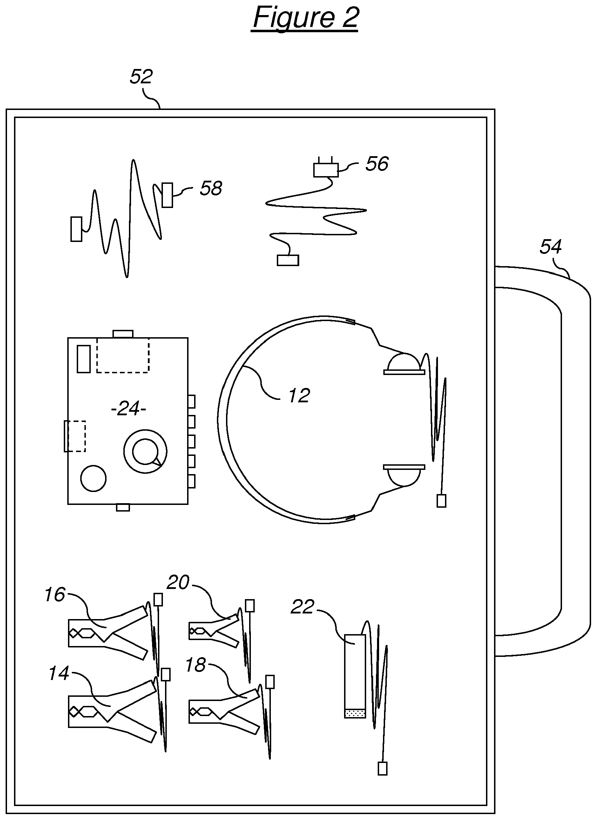

Pour faciliter le transport du dispositif portable 10 décrit précédemment, il est avantageusement prévu une mallette 52 dotée d'une poignée 54, comme illustré sur la figure 2. L'intérieur de cette mallette 52 est par exemple conçu pour comporter des logements dans lesquels viennent s'insérer chacun des éléments (déconnectés) du dispositif portable 10 : le casque 12, les capteurs 14 à 22 et le boîtier 24. En outre, des logements supplémentaires peuvent être prévus pour un cordon électrique 56 de recharge de la batterie 26 du boîtier 24 et pour un cordon électrique 58 de raccordement du boîtier 24 à un ordinateur.

Par ailleurs, cet ensemble constitué de la mallette de transport 52 et du dispositif portable 10 qu'elle contient peut aussi comporter un CD-ROM dans lequel sont stockés des programmes informatiques spécifiques de traitement et/ou visualisation des signaux audio ou vidéo qui peuvent être transmis à un ordinateur par le boîtier 10 via son connecteur 50.

Il apparaît clairement que le dispositif portable 10 décrit précédemment permet de réaliser des investigations acoustiques et vibratoires qualitatives en toute sécurité et sans encombrement excessif en approchant au plus près l'oreille de l'objet à étudier, que ce soit en situation de stationnement d'un véhicule automobile ou sur route lors d'essais.

Disposant d'une source de courant autonome dans le boîtier 24 à fonctions multiples, il peut atteindre une bonne autonomie et utiliser des éléments de détection et/ou d'écoute standard de qualité auditive élevée.

Les moyens de raccordement du boîtier 10 à un ordinateur permettent, sans pour autant interrompre l'écoute au casque, d'envisager des actions de transfert des informations captées en temps réel vers des experts distants.

Enfin le rangement dans une mallette rend le dispositif complet très facilement transportable.

Au final, dans une application de diagnostic vibroacoustique en assistance après-vente d'un véhicule automobile, le temps d'expertise est réduit, le problème est plus facilement analysé et les causes mieux identifiées. Il en résulte une réduction importante des coûts de l'assistance après-vente.

## Revendications

1. Dispositif portable (10) d'aide à un diagnostic vibroacoustique pour l'analyse de bruits notamment émis par un véhicule automobile, comportant une source (26) d'alimentation en courant électrique, un haut-parleur (12), des capteurs sonores de type pince (14, 16, 18, 20) et un capteur sonore de type microphone (22), et un boîtier de raccordement (24) muni de prises (28, 30, 32, 34, 36) de raccordement électrique du haut-parleur (12) et de ladite au moins une pince (14, 16, 18, 20) et du capteur sonore de type microphone (22), la source (26) d'alimentation en courant électrique étant intégrée dans le boîtier de raccordement (24), le boîtier de raccordement (24) comportant plusieurs prises (28, 30, 32, 34, 36, 38) de raccordement aux capteurs sonores différents (14, 16, 18, 20, 22), les capteurs sonores (14, 16, 18, 20, 22) étant raccordables simultanément via les prises de raccordement (28, 30, 32, 34, 36, 38) et un commutateur (40) pour sélectionner la transmission de signaux sonores de l'un quelconque de ces capteurs vers le haut-parleur (12), **caractérisé en ce que** les capteurs sonores de type pince (14, 16, 18, 20) sont de tailles différentes et **en ce que** le boîtier de raccordement (24) comporte des moyens (48) de transformation des signaux fournis par les capteurs sonores (14, 16, 18, 20, 22) en au moins un fichier de données à un format prédéterminé lisible par un ordinateur et des moyens (50) de raccordement à cet ordinateur.

2. Dispositif portable d'aide à un diagnostic vibroacoustique selon la revendication 1, dans lequel le capteur sonore (22) de type microphone est un microphone de type stylo ou micro-cravate (22A).

3. Dispositif portable d'aide à un diagnostic vibroacoustique selon la revendication 1 ou la revendication 2, dans lequel le microphone (22A) est combiné à une caméra (22B).

4. Dispositif portable d'aide à un diagnostic vibroacoustique selon l'une quelconque des revendications 1 à 3, dans lequel la source (26) d'alimentation en courant électrique comporte un accumulateur électrique, notamment une batterie d'accumulateurs.

5. Dispositif portable d'aide à un diagnostic vibroacoustique selon la revendication 4, dans lequel le boîtier de raccordement (24) comporte un témoin (46) de l'état de charge de l'accumulateur électrique (26).

6. Dispositif portable d'aide à un diagnostic vibroacoustique selon l'une quelconque des revendications 1 à 5, dans lequel le haut-parleur (12) est intégré dans un casque d'écoute audio raccordable au boîtier de raccordement (24).

7. Dispositif portable d'aide à un diagnostic vibroacoustique selon l'une quelconque des revendications 1 à 6, comportant au moins quatre pinces (14, 16, 18, 20).

8. Dispositif portable d'aide à un diagnostic vibroacoustique selon l'une quelconque des revendications 1 à 7, dans lequel le boîtier de raccordement (24) comporte plusieurs prises (28, 30, 32, 34, 36, 38) de raccordement à des capteurs sonores différents (14, 16, 18, 20, 22) et un commutateur (40) pour sélectionner la transmission de signaux sonores de l'un quelconque de ces capteurs vers le haut-parleur (12).

9. Dispositif portable d'aide à un diagnostic vibroacoustique selon l'une quelconque des revendications 1 à 8, dans lequel le boîtier de raccordement (24) comporte un bouton (42) de réglage de niveau sonore dans le haut-parleur (12).

10. Dispositif portable d'aide à un diagnostic vibroacoustique selon l'une quelconque des revendications 1 à 9, dans lequel le boîtier de raccordement (24) comporte un équaliseur pour le filtrage des signaux sonores fournis par lesdits capteurs sonores (14, 16, 18, 20, 22).

11. Ensemble portable d'aide à un diagnostic vibroacoustique comportant un dispositif (10) selon l'une quelconque des revendications 1 à 10 et une mallette de transport (52) conçue pour le rangement du dispositif.

## Patentansprüche

1. Tragbares Gerät (10) für mit vibroakustischen Diagnose für die Analyse von Geräuschen besonders emittieren von einem Kraftfahrzeuge zu unterstützen, umfassend eine Quelle (26) der elektrischen Stromversorgung, einen Lautsprecher (12), Sensor Schall Clamp-Typen (14 , 16, 18, 20) und ein hörbares Sensormikrofon (22) und ein mit Buchsen (28, 30, 32, 34, 36) versehenes Verbindungsgehäuse (24) zum elektrischen Anschluss des Lautsprechers (12) und des mindestens einer Klemme (14, 16, 18, 20) und des Schallsensors vom Mikrofontyp (22) die Quelle (26) zum Zuführen von elektrischem Strom wobei integriert in das Anschlussfeld (24), der Anschlusskasten 24 umfasst mehrere Buchsen (28, 30, 32, 34, 36, 38) zum Anschluss an verschiedene Schallsensoren (14, 16, 18, 20, 22), die Schall gleichzeitig über die Anschlussbuchsen (28, 30 , 32, 34, 36, 38) anschließbare Sensoren (14, 16, 18, 20, 22) und einen Schalter (40) zur Auswahl der Übertragung von Tonsignalen aus den diese Sensoren an den Lautsprecher (12), **dadurch gekennzeichnet, dass** die Clip- Schallsensoren (14, 16, 18, 20) unterschiedlich groß sind und dassDer Anschlusskasten (24) umfasst, Mittel (48), Verarbeiten der Signale, geliefert von dem Sensor Schall (14, 16, 18, 20, 22) in mindestens eine Datendatei in einem lesbaren vorbestimmten Format, das von einem Computer und eine Einrichtung (50) für den Anschluss an diesen Computer.

2. Tragbares Gerät zur Unterstützung einer vibroakustischen Diagnose nach Anspruch 1, in dem der Schallsensor (22) des Mikrofontypen ist ein Mikrofon des Stiftes oder lavalier Typs (22A).

3. Tragbares Gerät zur Unterstützung einer vibroakustischen Diagnose nach Anspruch 1 oder Anspruch 2, wobei das Mikrofon (22A) mit einer Kamera (22B) kombiniert ist.

4. Tragbares Gerät zur Unterstützung einer vibroakustischen Diagnose nach einem der Ansprüche 1 bis 3, bei dem die Quelle (26) zum Zuführen von elektrischem Strom einen elektrischen Akkumulator, insbesondere eine Akkumulatorbatterie, umfasst.

5. Tragbares Gerät zur Unterstützung einer vibroakustischen Diagnose nach Anspruch 4, in dem der Anschlusskasten (24) umfasst einen Indikator (46) von dem Ladezustand des dem elektrischen Akkumulator (26).

6. Tragbares Gerät zur Unterstützung einer vibroakustischen Diagnose nach einem der Ansprüche 1 bis 5, wobei der Lautsprecher (12) in ein Audio - Headset integriert ist, mit dem Gehäuse verbindbar Verbindung (24).

7. Tragbares Gerät zur Unterstützung einer vibroakustischen Diagnose nach einem der Ansprüche 1 bis 6, umfassend mindestens vier Klemmen (14, 16, 18, 20).

8. Tragbares Gerät zur Unterstützung einer vibroakustischen Diagnose nach einem der Ansprüche 1 bis 7, bei dem die Anschlussbox (24) mehrere Buchsen (28, 30, 32, 34, 36, 38) zum Anschluss an verschiedene Geräusche aufweist Sensoren (14, 16, 18, 20, 22) und einen Schalter (40) für die Übertragung von der Auswahl Schallsignale aus jeder dieser Sensoren an den Lautsprecher (12).

9. Tragbares Gerät zur Unterstützung einer vibroakustischen Diagnose nach einem der Ansprüche 1 bis 8, bei dem die Anschlussbox (24) eine Taste (42) zum Einstellen des Schallpegels im Lautsprecher (12) umfasst.

10. Tragbares Gerät zur Unterstützung einer vibroakustischen Diagnose nach einem der Ansprüche 1 bis 9, bei dem die Anschlussbox (24) einen Entzerrer zum Filtern der von den Schallsensoren gelieferten Schallsignale umfasst (14, 16, 18, 20, 22).

11. Eine Montagezelle Hilfe einer vibroakustischen Diagnose mit einer Vorrichtung (10) nach einem der Ansprüche 1 bis 10 und einen Tragekoffer (52) ausgelegt für die Lagerung der Vorrichtung.

## Claims

1. Portable device (10) for assisting with a vibroacoustic diagnosis for the analysis of noises in particular emitted by a motor vehicle, comprising a source (26) of electric current supply, a loudspeaker (12), sensor s sound s clamp-type (14, 16, 18, 20) and a sensor audible type microphone (22) and a connecting housing (24) provided with sockets (28, 30, 32, 34, 36) electrical connection of the loudspeaker (12) and of said at least one clamp (14, 16, 18, 20) and of the microphone-type sound sensor (22), the
source (26) of electric current supply being integrated into the connection box (24), the connection box 24 comprising several sockets (28, 30, 32, 34, 36, 38) for connection to different sound sensors (14, 16, 18, 20, 22), the sound sensors (14, 16, 18, 20, 22) being connectable simultaneously via the connection sockets (28, 30 , 32, 34, 36, 38) and a switch (40) for selecting the transmission of sound signals from the any of these sensors to the speaker (12), **characterized in that** the clip-type sound sensors (14, 16, 18, 20) are of different sizes and **in that** the connection box (24) comprises means (48) processing the signals supplied by the sensor sound (14, 16, 18, 20, 22) into at least one data file in a readable predetermined format by a computer and means (50) for connecting to this computer.

2. A portable device for assisting with a vibroacoustic diagnosis according to claim 1, in which the sound sensor (22) of the microphone type is a microphone of the pen or lavalier type (22A).

3. A portable device for assisting a vibroacoustic diagnosis according to claim 1 or claim 2, wherein the microphone (22A) is combined with a camera (22B).

4. A portable device for assisting with a vibroacoustic diagnosis according to any one of claims 1 to 3, in which the source (26) of electric current supply comprises an electric accumulator, in particular an accumulator battery.

5. A portable device for assisting with a vibroacoustic diagnosis according to claim 4, in which the connection box (24) comprises an indicator (46) of the state of charge of the electric accumulator (26).

6. A portable device for assisting with a vibroacoustic diagnosis according to any one of claims 1 to 5, wherein the loudspeaker (12) is integrated into an audio headset connectable to the housing connection (24).

7. A portable device for assisting with a vibroacoustic diagnosis according to any one of claims 1 to 6, comprising at least four clamps (14, 16, 18, 20).

8. A portable device for assisting with a vibroacoustic diagnosis according to any one of claims 1 to 7, in which the connection box (24) comprises several sockets (28, 30, 32, 34, 36, 38) for connection to different sound sensors (14, 16, 18, 20, 22) and a switch (40) for selecting the transmission of sound signals from any of these sensors to the speaker (12).

9. A portable device for assisting with a vibroacoustic diagnosis according to any one of claims 1 to 8, in which the connection box (24) comprises a button (42) for adjusting the sound level in the loudspeaker (12).

10. A portable device for assisting with a vibroacoustic diagnosis according to any one of claims 1 to 9, wherein the connection housing (24) comprises an equalizer for filtering sound signals provided by said sound sensors (14, 16, 18, 20, 22).

11. An assembly cell help to a vibroacoustic diagnosis comprising a device (10) according to any one of claims 1 to 10 and a carrying case (52) designed e for storage of the device.
